# EUROPÄISCHE PATENTSCHRIFT

(11) **EP 2 863 556 B1**
(45) Veröffentlichungstag und Bekanntmachung des Hinweises auf die Patenterteilung: **21.12.2016**
(21) Anmeldenummer: 14186375.3
(22) Anmeldetag: 25.09.2014
(51) Int. Cl.: H04B 10/278, H04J 14/02, H04L 12/413

(54) **Zentrale Netzinstanz für ein Wellenlängenmultiplex-Kommunikationsnetzwerk**
Central network instance for wavelength multiplex communications network
Système de distribution centralisé pour un réseau de communication en multiplex en longueur d'ondes

(30) Priorität: 30.09.2013 DE 102013110804
(43) Veröffentlichungstag der Anmeldung: 22.04.2015
(60) Teilanmeldung: 16158100.4
(73) Patentinhaber: Deutsche Telekom AG, 53113 Bonn (DE)
(72) Erfinder: Schatzmayr, Rainer, 53229 Bonn (DE)
(74) Vertreter: Patentship Patentanwaltsgesellschaft mbH

(56) Entgegenhaltungen:
- WO-A1-2010/096205
- CN-A- 101 697 539
- US-A- 5 712 932
- US-A1- 2002 135 836
- US-A1- 2003 120 983
- US-A1- 2007 092 256
- US-B1- 6 870 836

## Beschreibung

### TECHNISCHES GEBIET

Die vorliegende Erfindung betrifft das Gebiet der optischen Datenübertragung im optischen Wellenlängenmultiplex.

### TECHNISCHER HINTERGRUND

Zur hochbitratigen Datenübertragung über optische Übertragungskanäle, wie beispielsweise mittels Glasfasern, wird oft das optische Wellenlängen-Multiplexverfahren (WDM: Wavelength Division Multiplexing) eingesetzt. Hierbei werden unterschiedlichen Netzwerkteilnehmern, beispielsweise unterschiedlichen Netzwerkroutern, unterschiedliche Frequenzbereiche bzw. Wellenlängenbereiche zugewiesen. Hierbei bildet jeder Frequenzbereich einen optischen Kanal, über den optische Daten eines Netzwerkteilnehmers, beispielsweise eines Netzwerkrouters, übertragen werden. Die optischen Daten sind üblicherweise moduliert und werden in eine Glasfaser mittels lichtemittierender Dioden eingekoppelt.

Kommunizieren die Netzwerkteilnehmer in unterschiedlichen Frequenzbereichen, d.h. in unterschiedlichen optischen Kanälen, so ist eine Wahrscheinlichkeit einer Kollision von Daten bei Datenübertragungen von unterschiedlichen Netzwerkteilnehmern sehr gering. Oft besteht jedoch die Notwendigkeit einer Zuweisung desselben optischen Kanals zu unterschiedlichen Netzwerkteilnehmern, wie dies beispielsweise bei einer hochbitratigen Datenübertragung im Terabit-Bereich der Fall sein kann.

Ein Beispiel für eine derartige hochbitratige Datenübertragungstechnologie ist die Tera-Stream-Technologie, welche ein IP-Netz (IP: Internet Protokoll) mit optischen Kanälen realisiert. Hierbei finden die optischen Datenübertragungen ausschließlich über IP-Datenverbindungen statt. Anstatt separater Netze für unterschiedliche Dienste stellt die Tera-Stream-Technologie genau ein Netz zur Verfügung, das für alle Anwendungen von Internet über Managed-IP Services bis hin zu Fernsehübertragungen zur Verfügung steht. Bei der Tera-Stream-Technologie wird IP Version 6 als Protokoll für die internen Schnittstellen verwendet, wobei die optischen Datenübertragungen über IP-Pakete durchgeführt werden.

Werden einzelne optische Kanäle (WDM-Kanäle) von unterschiedlichen Netzwerkteilnehmern gleichzeitig verwendet, so steigt die Wahrscheinlichkeit einer Kollision von Daten unterschiedlicher Netzwerkteilnehmer an. Datenkollisionen in optischen Kanälen sind insofern unerwünscht, als jede Kollision zu einer Verzögerung in der Datenübertragung führen kann. Daher wirken sich häufige Kollisionen in gleichen optischen Kanälen, insbesondere WDM-Kanälen, negativ auf die erreichbaren Datenübertragungsraten aus.

Zur Auflösung der Datenkollisionen in gleichen optischen Kanälen kann das CSMA/CD-Verfahren (CSMA: Carrier Sense Multiple Access, CD: Collision Detect) eingesetzt werden. Hierbei werden die optischen Kanäle überwacht, so dass der Netzwerkteilnehmer nur dann Zugriff auf einen bestimmten optischen Kanal bekommt, wenn gleichzeitig kein anderer Netzwerkteilnehmer über diesen Kanal überträgt, d.h. wenn der jeweilige optische Kanal frei ist. Ist ein optischer Kanal für eine bestimmte Zeitspanne von beispielsweise 9,6 Mikrosekunden nicht belegt, so kann der optische Kanal als frei betrachtet werden.

Durch den Einsatz des CSMA/CD-Verfahrens können zwar Datenkollisionen weitgehend vermieden werden. Mit steigender Anzahl von Netzwerkteilnehmern kann das CSMA/CD-Verfahren jedoch zu Verzögerungen der Kanalzugriffe führen.

Die Druckschrift US 2009/0016726 A1 beschreibt ein optisches Wellenlängenmultiplex-Zugangssystem mit einem sternförmigen Kommunikationsnetzwerk, das optische Sende/Empfangsvorrichtungen zum Zuweisen der Wellenlängen nutzt.

Die Druckschrift US 6,870,836 B1 beschreibt ein System und ein Verfahren zum Zuweisen von IP (Internet Protokoll) Daten über Punkt-zu-Punkt Verbindungen in einem passiven optischen Netzwerk (PON). Die Zugangskontrolle wird hierbei über eine Kollisionsdetektionslogik (CD collision detection) bewerkstelligt.

Die Druckschrift WO 2010/096205 A1 beschreibt ein selbstkorrigierendes System zum Vermeiden von Wellenlängenkollisionen.

Die Druckschrift US 2003/0120983 A1 beschreibt ein System zum vorsorglichen Umschalten von Datenpfaden in einem Kommunikationssystem abhängig von Qualitätsinformationen.

Die Druckschrift US 6,870,836 B1 beschreibt ein System zum Übertragen von IP Daten in einem optischen Kommunikationsnetzwerk.

Die Druckschrift US 2007/0092256 A1 beschreibt ein auf WDM basierendes passives optisches Netzwerk.

Die Druckschrift CN 101697539 A beschreibt ein optisches Kommunikationsnetzwerk.

### BESCHREIBUNG DER ERFINDUNG

Es ist daher die Aufgabe der vorliegenden Erfindung, ein effizienteres Konzept zum Zuweisen eines optischen Kanals zu einem Netzwerkteilnehmer, insbesondere einem Netzwerkrouter, für eine optische Datenübertragung in einem Wellenlängenmultiplex-Kommunikationsnetzwerk zu schaffen.

Diese Aufgabe wird durch die Merkmale der unabhängigen Ansprüche gelöst. Vorteilhafte Weiterbildungsformen sind Gegenstand der abhängigen Ansprüche, der Beschreibung sowie der beiliegenden Figuren.

Die vorliegende Erfindung basiert auf der Erkenntnis, dass sich weniger häufige Datenkollisionen in optischen Kanälen nicht signifikant auf eine Performance eines optischen Kommunikationsnetzwerks auswirken. Aus diesem Grund können weniger häufige Datenkollisionen zugelassen werden, wodurch die Anzahl der gleichzeitig kommunizierenden Netzwerkteilnehmer erhöht werden kann. Ein effizientes Konzept zum Zuweisen eines optischen Kanals zu einem Netzwerkteilnehmer kann daher auf der Basis von Wahrscheinlichkeiten von Datenkollisionen realisiert werden. Ist beispielsweise die Wahrscheinlichkeit einer Datenkollision in einem ersten optischen Kanal geringer als die Wahrscheinlichkeit einer Datenkollision in einem zweiten optischen Kanal, so kann der erste optische Kanal einem Netzwerkteilnehmer für die optische Datenübertragung zugewiesen werden. Auf diese Weise kann die Anzahl der gleichzeitig kommunizierenden Netzwerkteilnehmer erhöht werden.

Gemäß einem Aspekt betrifft die Erfindung eine zentrale Netzinstanz zum Zuweisen eines optischen Kanals zu einem dezentralen Netzknoten für eine optische Datenübertragung in einem Wellenlängenmultiplex-Kommunikationsnetzwerk, wobei die zentrale Netzinstanz an einem Netzwerkrand angeordnet ist, und wobei die zentrale Netzinstanz folgendes umfasst: eine optische Kommunikationsschnittstelle zum Empfangen von optischen Daten über einen ersten optischen Kanal des Wellenlängenmultiplex-Kommunikationsnetzwerkes und zum Empfangen von optischen Daten über einen zweiten optischen Kanal des Wellenlängenmultiplex-Kommunikationsnetzwerkes, einen Prozessor, welcher eingerichtet ist, auf der Basis der empfangenen optischen Daten des ersten optischen Kanals eine erste Wahrscheinlichkeit von Datenkollisionen in dem ersten optischen Kanal des Wellenlängenmultiplex-Kommunikationsnetzwerkes zu bestimmen, auf der Basis der empfangenen optischen Daten des zweiten optischen Kanals eine zweite Wahrscheinlichkeit von Datenkollisionen in dem zweiten optischen Kanal des Wellenlängenmultiplex-Kommunikationsnetzwerkes zu bestimmen, wobei die Datenkollisionen sich auf eine gleichzeitige Verwendung der optischen Kanäle durch unterschiedliche Netzwerkteilnehmer beziehen, und denjenigen optischen Kanal mit der geringeren Wahrscheinlichkeit von Datenkollisionen zu dem Netzwerkrouter für die optische Datenübertragung in dem Wellenlängenmultiplex-Kommunikationsnetzwerk zuzuweisen, wobei dem dezentralen Netzknoten der erste optische Kanal zugewiesen ist, wobei die erste Wahrscheinlichkeit von Datenkollisionen größer als die zweite Wahrscheinlichkeit von Datenkollisionen ist, und wobei der der Prozessor ausgebildet ist, einen Wechsel von dem ersten optischen Kanal zu dem zweiten optischen Kanal durch Zuweisung des zweiten optischen Kanals zu dem dezentralen Netzknoten nur dann zu initiieren, wenn die erste Wahrscheinlichkeit von Datenkollisionen einen vorbestimmten Schwellwert überschreitet.

Die zentral Netzwerkinstanz kann optische Daten von mehreren Routern, welche beispielsweise durch L2-Ethernet-Switches aggregiert wurden, empfangen kann. Die zentrale Netzinstanz kann beispielsweise mit verschiedenen Zugangsnetzen, wie beispielsweise DSL, Mobilfunk oder Glasfaser, verbunden sein. In der Tera-Stream-Topologie kann die zentrale Netzinstanz beispielsweise den sogenannten R1-Router bilden.

Der dezentrale Netzknoten ist beispielsweise ein Netzwerkteilnehmer, insbesondere ein Netzwerkknoten, mit einer Routing-Funktionalität. Der dezentrale Netzknoten bzw. Netzwerkrouter kann gemäß der Tera-Stream-Topologie in dem Wellenlängenmultiplex-Kommunikationsnetzwerk angesiedelt sein und eine direkte Kommunikationsverbindung zu der zentralen Netzinstanz aufbauen.

Die optische Kommunikationsschnittstelle kann beispielsweise einen Laserempfänger aufweisen, welcher einen oder mehrere optische Kanäle des Wellenlängenmultiplex-Kommunikationsnetzwerkes empfangen kann.

Der optische Kanal ist hierbei durch einen Frequenzbereich bestimmt, welcher einem Router zugewiesen werden kann. Der optische Kanal kann beispielsweise durch einen Frequenzbereich bzw. durch einen Wellenlängenbereich bestimmt sein, welcher sich nach der Norm ITU-T G.694.1 bzw. ITU-T G.694.2 richtet. Weitere Übertragungseigenschaften des optischen Kanals können beispielsweise gemäß der Norm ITU-T G.652 vorliegen.

Gemäß einer Ausführungsform ist der Prozessor ausgebildet, eine Anzahl von Datenkollisionen in dem ersten optischen Kanal innerhalb eines vorbestimmten Zeitintervalls zu erfassen, um die erste Wahrscheinlichkeit zu bestimmen, und ist der Prozessor ausgebildet, eine Anzahl von Datenkollisionen in dem zweiten optischen Kanal innerhalb des vorbestimmten Zeitintervalls zu erfassen, um die zweite Wahrscheinlichkeit zu bestimmen.

Das vorbestimmte Zeitintervall kann beispielsweise 1 Mikrosekunde, 2 Mikrosekunden, 10 Mikrosekunden, 100 Mikrosekunden, 1 Millisekunde, 5 Millisekunden oder 10 Millisekunden lang sein. Durch die Bestimmung der jeweiligen Anzahl der Datenkollisionen wird die Häufigkeit von Datenkollisionen bestimmt. Die jeweilige Wahrscheinlichkeit einer Datenkollision kann auf der Basis der jeweiligen Häufigkeit von Datenkollisionen ermittelt werden.

Gemäß einer Ausführungsform ist der Prozessor ausgebildet, anhand der empfangenen Daten des ersten optischen Kanals eine erste Bitfehlerwahrscheinlichkeit zu berechnen, um eine Datenkollision in dem ersten optischen Kanal zu erfassen, und ist der Prozessor ferner ausgebildet, anhand der empfangenen Daten des zweiten optischen Kanals eine zweite Bitfehlerwahrscheinlichkeit zu berechnen, um eine Datenkollision in dem zweiten optischen Kanal zu erfassen.

Hierzu kann der Prozessor ausgebildet sein, eine gegenüber einer kollisionsfreien Datenübertragung erhöhte Bitfehlerwahrscheinlichkeit als ein Indiz für eine Datenkollision heranzuziehen. Die Bitfehlerwahrscheinlichkeit bzw. die zu erwartende Bitfehlerwahrscheinlichkeit bei einer kollisionsfreien Datenübertragung kann beispielsweise vorgespeichert sein. Die Bitfehlerwahrscheinlichkeiten bei datenfreien Übertragungen können im Vorfeld entweder durch Simulationen oder durch Messungen erfasst werden.

Gemäß einer Ausführungsform ist der Prozessor ausgebildet, eine Datenkollision in dem ersten optischen Kanal anhand eines Signalpegels der optischen Daten des ersten optischen Kanals zu bestimmen, und ist der Prozessor ausgebildet, eine Datenkollision in dem zweiten optischen Kanal anhand eines Signalpegels der optischen Daten des zweiten optischen Kanals zu bestimmen.

Bei einer Datenkollision findet eine Überlagerung von optischen Signalen statt. Bei einer positiven, d.h. zumindest teilweise phasengleichen Signalüberlagerung erhöht sich der Signalpegel im Vergleich zu einem kollisionsfreien Fall. Bei einer negativen Überlagerung, d.h. bei zumindest abschnittsweise entgegengesetzter Signalpolarität, resultiert ein verringerter Signalpegel im Vergleich zu einem Signalpegel bei einer kollisionsfreien Datenübertragung. Eine Veränderung des Signalpegels bzw. dessen absoluter Wert kann als Indiz für ein Vorliegen einer Datenkollision herangezogen werden.

Dem dezentralen Netzknoten ist der erste optische Kanal zugewiesen, wobei die erste Wahrscheinlichkeit von Datenkollisionen größer als die zweite Wahrscheinlichkeit von Datenkollisionen ist, und der Prozessor ist ausgebildet, einen Wechsel von dem ersten optischen Kanal zu dem zweiten optischen Kanal durch Zuweisung des zweiten optischen Kanals zu den dezentralen Netzknoten nur dann zu initiieren, wenn die erste Wahrscheinlichkeit von Datenkollisionen einen vorbestimmten Schwellwert überschreitet.

Hierbei ist es möglich, den optischen Kanal bei einer laufenden Datenübertragung zu wechseln, falls die Wahrscheinlichkeit von Datenkollisionen einen vorbestimmten Schwellwert erreicht oder überschreitet. Der vorbestimmte Schwellwert kann beispielsweise 5%, 10%, 20% oder 30% Wahrscheinlichkeit betragen. Die Zuweisung des zweiten optischen Kanals zu dem Netzwerkrouter kann beispielsweise mittels eines Kanalzuweisungssignals erfolgen, welches durch die Netzwerkentität zu dem Netzwerkrouter ausgesendet wird. Das Kanalzuweisungssignal kann beispielsweise gemäß dem Secure Shell Protokoll (SSH) ausgesendet werden, welches für die Konfigurierung der Netzwerkrouter eingesetzt werden kann.

Gemäß einer Ausführungsform ist die zentrale Netzinstanz ausgebildet, ein Kanalzuweisungssignal zu dem dezentralen Netzknoten auszusenden, um dem dezentralen Netzknoten denjenigen optischen Kanal mit der geringeren Wahrscheinlichkeit von Datenkollisionen zuzuweisen. Durch das Aussenden des Kanalzuweisungssignals wird der Wechsel des optischen Kanals initiiert.

Gemäß einer Ausführungsform wird das Kanalzuweisungssignal mittels eines kryptographischen Netzwerkprotokolls, insbesondere des Secure Shell Protokolls, zu dem Netzwerkrouter ausgesendet. Das Kanalzuweisungssignal kann entsprechend an eine SSH-Schnittstelle des Netzwerkrouters ausgesendet werden.

Gemäß einer Ausführungsform sind der erste optische Kanal und der zweite optische Kanal in unterschiedlichen Frequenzbereichen angeordnet. Die Frequenzbereiche können beispielsweise gemäß den vorgenannten ITU-T Normen gegeben sein.

Gemäß einer Ausführungsform umfasst die optische Kommunikationsschnittstelle eine optische Empfangsdiode zum Empfangen von optischen Daten einer Mehrzahl von optischen Kanälen. Die Empfangsdiode kann beispielsweise eine lasergetunte Empfangsdiode oder eine breitbandige Empfangsdiode sein. Die optischen Kanäle belegen hierbei Frequenzbereiche, welche gemäß den vorgenannten ITU-T Normen bestimmt sein können.

Gemäß einer Ausführungsform ist die zentrale Netzinstanz ausgebildet, das Carrier Sense Multiple Access Verfahren, insbesondere Carrier Sense Multiple Access with Collision Detection Verfahren, auszuführen. Auf diese Weise kann zusätzlich eine Zugriffsüberwachung durchgeführt werden.

Das Carrier Sense Multiple Access with Collision Detection Verfahren kann gemäß der Norm IEEE 802.3 durchgeführt werden.

Gemäß einer Ausführungsform ist die zentrale Netzinstanz ein Netzwerkrouter. Die zentrale Netzinstanz kann beispielsweise ein zentraler Netzwerkrouter, insbesondere ein R1-Netzwerkrouter gemäß der Tera-Stream-Technologie sein.

Gemäß einem weiteren Aspekt betrifft die Erfindung ein Verfahren zum Zuweisen eines optischen Kanals zu einem dezentralen Netzknoten für eine optische Datenübertragung in einem Wellenlängenmultiplex-Kommunikationsnetzwerk mit Empfangen von optischen Daten über einen ersten optischen Kanal des Wellenlängenmultiplex-Kommunikationsnetzwerkes, Empfangen von optischen Daten über einen zweiten optischen Kanal des Wellenlängenmultiplex-Kommunikationsnetzwerkes, Bestimmen einer ersten Wahrscheinlichkeit von Datenkollisionen in dem ersten optischen Kanal des Wellenlängenmultiplex-Kommunikationsnetzwerkes auf der Basis der empfangenen optischen Daten des ersten optischen Kanals, Bestimmen einer zweiten Wahrscheinlichkeit von Datenkollisionen in dem zweiten optischen Kanal des Wellenlängenmultiplex-Kommunikationsnetzwerkes auf der Basis der empfangenen optischen Daten des zweiten optischen Kanals, wobei die Datenkollisionen sich auf eine gleichzeitige Verwendung der optischen Kanäle durch unterschiedliche Netzwerkteilnehmer beziehen, Zuweisen desjenigen optischen Kanals mit der geringeren Kollisionswahrscheinlichkeit zu dem dezentralen Netzknoten für die optische Datenübertragung in dem Wellenlängenmultiplex-Kommunikationsnetzwerk, wobei dem dezentralen Netzknoten der erste optische Kanal zugewiesen ist, wobei die erste Wahrscheinlichkeit von Datenkollisionen größer als die zweite Wahrscheinlichkeit von Datenkollisionen ist; und Initiieren eines Wechsels von dem ersten optischen Kanal zu dem zweiten optischen Kanal durch Zuweisung des zweiten optischen Kanals zu dem dezentralen Netzknoten nur dann, wenn die erste Wahrscheinlichkeit von Datenkollisionen einen vorbestimmten Schwellwert überschreitet.

Weitere Verfahrensschritte ergeben sich unmittelbar aus der Funktionalität der erfindungsgemäßen Netzwerkentität.

Die Erfindung kann in Hardware und/oder Software realisiert werden.

### BESCHREIBUNG DER FIGUREN

Weitere Ausführungsbeispiele werden Bezug nehmend auf die beiliegenden Figuren näher erläutert. Es zeigen:
- Fig. 1: ein schematisches Diagramm eines Kommunikationssystems gemäß einer Ausführungsform;
- Fig. 2: ein schematisches Diagramm einer Netzwerkentität gemäß einer Ausführungsform;
- Fig. 3: ein schematisches Diagramm eines Netzwerkrouters gemäß einer Ausführungsform; und
- Fig. 4: ein schematisches Diagramm eines Verfahrens zum Zuweisen eines optischen Kanals zu einem Netzwerkrouter gemäß einer Ausführungsform.

### DETAILIERTE BESCHREIBUNG DER FIGUREN

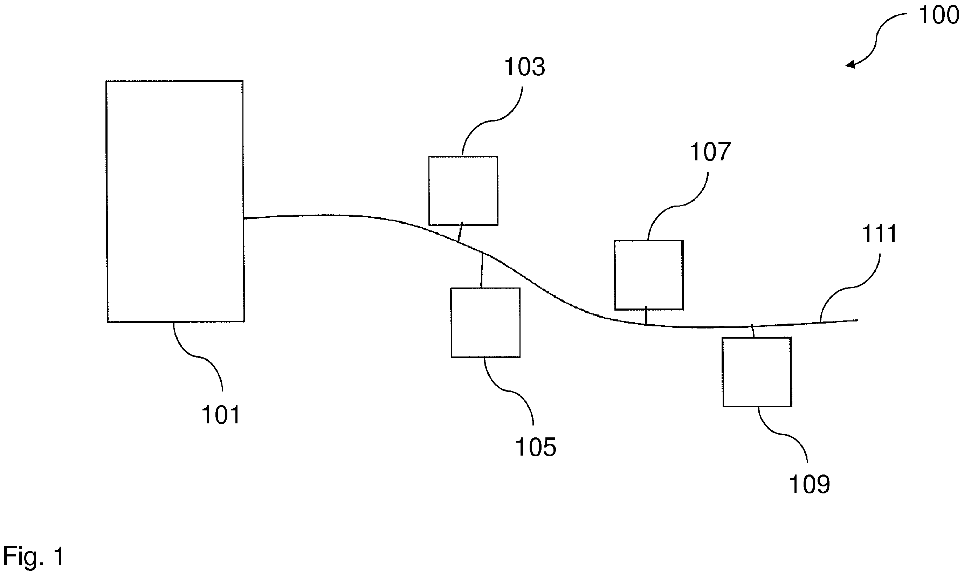

Fig. 1 zeigt ein schematisches Diagramm eines Kommunikationssystems 100 mit einer Netzwerkentität 101 sowie einer Mehrzahl von Netzwerkroutern 103, 105, 107, 109, welche als dezentrale Netzknoten an eine Glasfaser 111 angebunden sind. Das in Fig. 1 dargestellte Kommunikationssystem 100 kann beispielsweise ein Wellenlängenmultiplex-Kommunikationsnetzwerk gemäß der Norm ITU-T G.694 bilden. Hierbei sind die Netzwerkrouter 103, 105, 107, 109 ausgebildet, in optischen Kanälen zu kommunizieren, welche durch Frequenzbereiche bestimmt sind, die in der vorgenannten ITU-T Norm spezifiziert sind.

Die Netzwerkentität 101 kann beispielsweise eine zentrale Netzinstanz sein, welche an einem Netzwerkrand angeordnet ist. Die Netzwerkentität 101 kann beispielsweise über L2-Switches mit einem xDSL-Netzwerk oder einem mobilen Netzwerk verbunden sein. Gemäß einer Ausführungsform kann die Netzwerkentität 101 ein sogenannter R1-Netzwerkrouter gemäß der Tera-Stream-Topologie sein. In diesem Fall sind die Netzwerkrouter 103, 105, 107, 109 die sogenannten R2-Router der Tera-Stream-Topologie. Die Netzwerkentität 101 ist vorgesehen, optische Kanäle zu den Netzwerkroutern 103, 105, 107, 109 zuzuweisen. Hierzu ermittelt die Netzwerkentität 101 unterschiedliche übertragungsrelevante Parameter, wie beispielsweise die Wahrscheinlichkeit von Datenkollisionen oder die Bitfehlerwahrscheinlichkeit. Die übertragungsrelevanten Parameter können mit einem oder mehreren vorbestimmten Schwellwerten verglichen werden. Bei einer Überschreitung eines Schwellwertes kann die Netzwerkentität 101 einen Wechsel eines optischen Kanals für den jeweiligen Netzwerkrouter 103, 105, 107, 109 veranlassen. Hierbei kann beispielsweise ein Wechsel eines WDM-Kanals bzw. ein Wechsel einer Frequenz bzw. eines Frequenzbereichs veranlasst werden. Auf diese Weise ist es möglich, das in Fig. 1 dargestellte Kommunikationssystem 100 auf veränderliche Übertragungsgegebenheiten anzupassen und dadurch zu adaptieren.

Auf der Basis der ermittelten Wahrscheinlichkeit von Datenkollisionen kann die Netzwerkentität 101 darüber hinaus ausgebildet sein, Vorhersagen über eine Wahrscheinlichkeit von Datenkollisionen in Abhängigkeit von unterschiedlichen Parametern, wie beispielsweise Ort oder Zeit, zu bestimmen. Somit kann die Netzwerkentität 101 ausgebildet sein, Kanäle mit häufigen Kollisionen zu erkennen und einen Kanalwechsel in Echtzeit, d.h. bei einer Datenübertragung, herbeizuführen. Alternativ oder zusätzlich können durch die Vorhersagen der Wahrscheinlichkeiten von Datenkollisionen die optischen Kanäle vorausschauend geändert werden, um so künftige Kollisionen zu reduzieren. Auf diese Weise wird die Wahrscheinlichkeit von Datenkollisionen nicht nur pro optischen Kanal, sondern insgesamt minimiert.

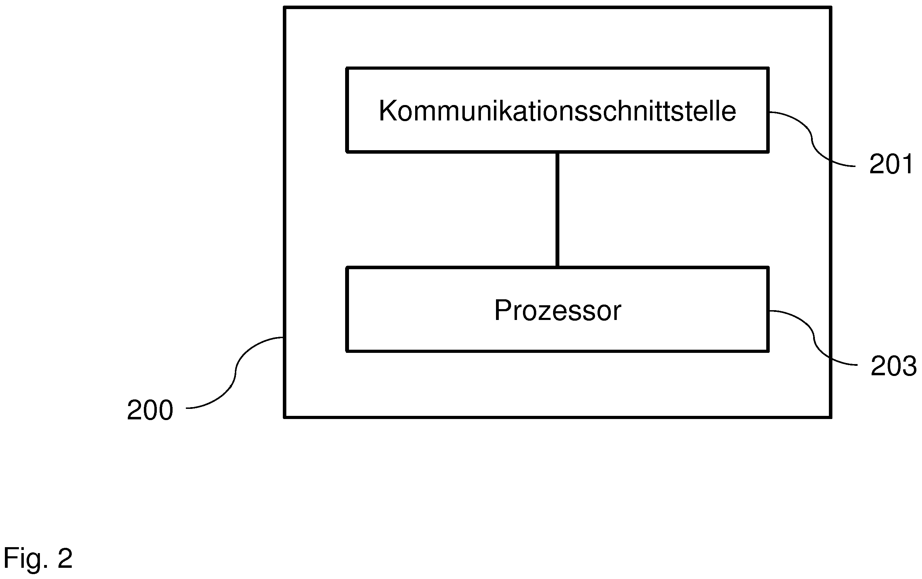

Fig. 2 zeigt ein schematisches Diagramm einer Netzwerkentität 200 zum Zuweisen eines optischen Kanals zu einem Netzwerkrouter für eine optische Datenübertragung in einem Wellenlängenmultiplex-Kommunikationsnetzwerk. Die Netzwerkentität 200 kann beispielsweise die in Fig. 1 dargestellte Netzwerkentität 101 bilden. Der Netzwerkrouter kann beispielsweise einer der in Fig. 1 dargestellten Netzwerkrouter 103, 105, 107, 109 sein.

Die Netzwerkentität 200 umfasst eine optische Kommunikationsschnittstelle 201 zum Empfangen von optischen Daten über einen ersten optischen Kanal des Wellenlängenmultiplex-Kommunikationsnetzwerkes sowie zum Empfangen von optischen Daten über einen zweiten optischen Kanal des Wellenlängenmultiplex-Kommunikationsnetzwerkes. Die optischen Kanäle können beispielsweise durch die vorgenannte ITU-T Norm bestimmt sein. Das Wellenlängenmultiplex-Kommunikationsnetzwerk kann beispielsweise mittels der in Fig. 1 dargestellten Glasfaser 111 realisiert sein.

Die Netzwerkentität 200 umfasst ferner einen Prozessor 203, welcher eingerichtet ist, auf der Basis der empfangenen optischen Daten des ersten optischen Kanals eine erste Wahrscheinlichkeit von Datenkollisionen in dem ersten optischen Kanal des Wellenlängenmultiplex-Kommunikationsnetzwerkes zu bestimmen, auf der Basis der empfangenen optischen Daten des zweiten optischen Kanals eine zweite Wahrscheinlichkeit von Datenkollisionen in dem zweiten optischen Kanal des Wellenlängenmultiplex-Kommunikationsnetzwerkes zu bestimmen und denjenigen optischen Kanal mit der geringeren Wahrscheinlichkeit von Datenkollisionen zu dem Netzwerkrouter für die optische Datenübertragung in dem Wellenlängenmultiplex-Kommunikationsnetzwerk zuzuweisen.

Ist beispielsweise die erste Wahrscheinlichkeit geringer als die zweite Wahrscheinlichkeit, so wird der Prozessor 203 den ersten optischen Kanal zu dem Netzwerkrouter zuweisen. Ist hingegen die zweite Wahrscheinlichkeit von Datenkollisionen geringer als die erste Wahrscheinlichkeit von Datenkollisionen, so wird der Prozessor 203 den zweiten Kanal zu dem Netzwerkrouter zuweisen. Ansprechend auf die Zuweisung kann der Prozessor 203 die Kommunikationsschnittstelle 201 anweisen, ein Kanalzuweisungssignal über das Wellenlängenmultiplex-Kommunikationsnetzwerk zu dem Netzwerkrouter auszusenden, um einen optischen Kanal zuzuweisen oder um einen optischen Kanal zu wechseln. Das Kanalzuweisungssignal kann beispielsweise gemäß einem Secure Shell (SSH) Protokoll ausgesendet werden und durch eine SSH-Schnittstelle des Netzwerkrouters empfangen werden.

Zur Bestimmung der jeweiligen Wahrscheinlichkeit von Datenkollisionen kann der Prozessor 203 die Anzahl von Datenkollisionen in dem jeweiligen optischen Kanal bestimmen. Dies kann beispielsweise auf der Basis einer Erfassung von Bitfehlerwahrscheinlichkeiten erfolgen. Der Prozessor 203 kann jedoch ebenfalls ausgebildet sein, die Datenkollisionen auf der Basis von Signalpegeln in dem jeweiligen optischen Kanal zu bestimmen. Hierzu kann die Kommunikationsschnittstelle 201 die Signalpegel detektieren und beispielsweise einen jeweiligen Wert eines jeweiligen detektierten Signalpegels an den Prozessor 203 weiterleiten.

Auf diese Weise kann die Netzwerkentität 200, welche ein Netzwerkrouter sein kann, optische Kanäle mit Datenkollisionen erkennen und einen Wechsel von optischen Kanälen herbeiführen, um Datenkollisionen zu reduzieren.

Der Prozessor 203 kann ausgebildet sein, die Häufigkeit von Datenkollisionen einzelner optischer Kanäle, beispielweise Frequenzkanäle oder WDM-Kanäle, zu analysieren sowie auf dieser Basis Kennwerte, wie beispielsweise die Anzahl von Datenkollisionen pro Zeiteinheit oder statistische Parameter, zu bestimmen. Hieraus kann der Prozessor 203 die Wahrscheinlichkeit von Datenkollisionen ableiten. Dadurch kann die Netzwerkentität 200 den Netzwerkrouter bzw. die in Fig. 1 dargestellten Netzwerkrouter 103, 105, 107, 109 über Änderungen in den Übertragungskanälen benachrichtigen, welche die Netzwerkrouter durchführen sollen. Diese Benachrichtigung kann auf der Basis des vorgenannten Kanalzuweisungssignals erfolgen.

Auf diese Weise werden optische Kanäle mit besonders großer Kollisionswahrscheinlichkeit vermieden und optische Kanäle mit geringerer Kollisionswahrscheinlichkeit forciert bzw. bevorzugt. Neben einer Reduktion von kollisionsbedingten Unterbrechungen von Datenübertragungen kann damit auch eine Lastenverteilung auf unterschiedliche optische Kanäle mit geringerer Auslastung realisiert werden.

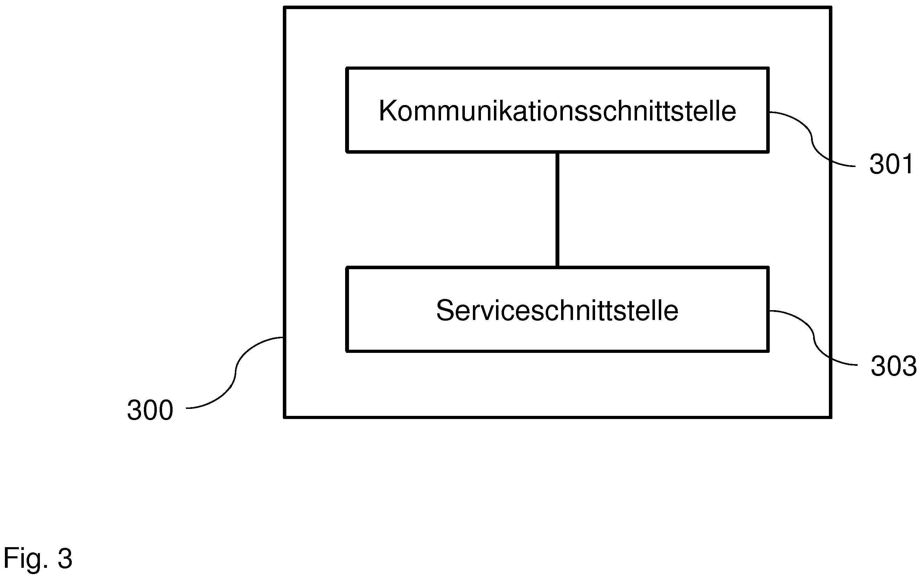

Fig. 3 zeigt ein schematisches Diagramm eines Netzwerkrouters 300 für eine optische Datenübertragung in einem Wellenlängenmultiplex-Kommunikationsnetzwerk über einen optischen Kanal. Der Netzwerkrouter 300 kann beispielsweise einen der in Fig. 1 dargestellten Netzwerkrouter 103, 105, 107, 109 realisieren.

Der Netzwerkrouter 300 umfasst eine Kommunikationsschnittstelle 301, welche zum Aussenden von optischen Daten über einen ersten optischen Kanal ausgebildet ist. Der erste optische Kanal kann beispielsweise ein Frequenzkanal sein und einen Frequenzbereich belegen, wie dies in der vorgenannten ITU-T Norm beschrieben ist. Die Kommunikationsschnittstelle 301 kann hierzu eine Sendediode oder einen Sendelaser umfassen.

Der Netzwerkrouter 300 umfasst darüber hinaus eine Serviceschnittstelle 303, welche ausgebildet ist, ein Kanalzuweisungssignal zu empfangen, das einen Wechsel von dem ersten optischen Kanal zu einem zweiten optischen Kanal anzeigt. Der Wechsel kann beispielsweise dadurch bedingt sein, dass eine Wahrscheinlichkeit von Datenkollisionen in dem ersten optischen Kanal einen vorbestimmten Schwellwert überschreitet, wie es vorstehend ausgeführt wurde.

Die Serviceschnittstelle 303 kann ausgebildet sein, das Kanalzuweisungssignal und/oder eine Information über den zweiten optischen Kanal an die Kommunikationsschnittstelle 301 weiterzuleiten. Ansprechend hierauf ist die Kommunikationsschnittstelle 301 ausgebildet, den optischen Kanal zu wechseln und die optischen Daten über den zweiten optischen Kanal auszusenden. Der Wechsel des optischen Kanals kann beispielsweise über eine Verstimmung eines optischen Sendelasers oder einer Sendediode hin zu dem Frequenzbereich des zweiten optischen Kanals erfolgen.

Die Serviceschnittstelle 303 kann beispielsweise eine SSH-Serviceschnittstelle sein, über welche der Netzwerkrouter 300 konfigurierbar ist. Die Serviceschnittstelle 303 kann ausgebildet sein, dauerhaft aktiv zu sein, um einen möglichen Empfang eines Kanalzuweisungssignals, beispielsweise durch die Kommunikationsschnittstelle 301, zu überwachen. Das Kanalzuweisungssignal kann hierzu mittels des IP-Protokolls an die Serviceschnittstelle 303 übertragen werden. Hierzu kann die Serviceschnittstelle 303 eine eindeutige Netzwerkadresse aufweisen.

Gemäß einer Ausführungsform sind die Kommunikationsschnittstelle 301 und die Serviceschnittstelle 303 getrennte Schnittstellen. Gemäß einer anderen Ausführungsform sind die Kommunikationsschnittstelle 301 und die Serviceschnittstelle 303 in einer gemeinsamen Schnittstelle des Netzwerkrouters 300 angeordnet.

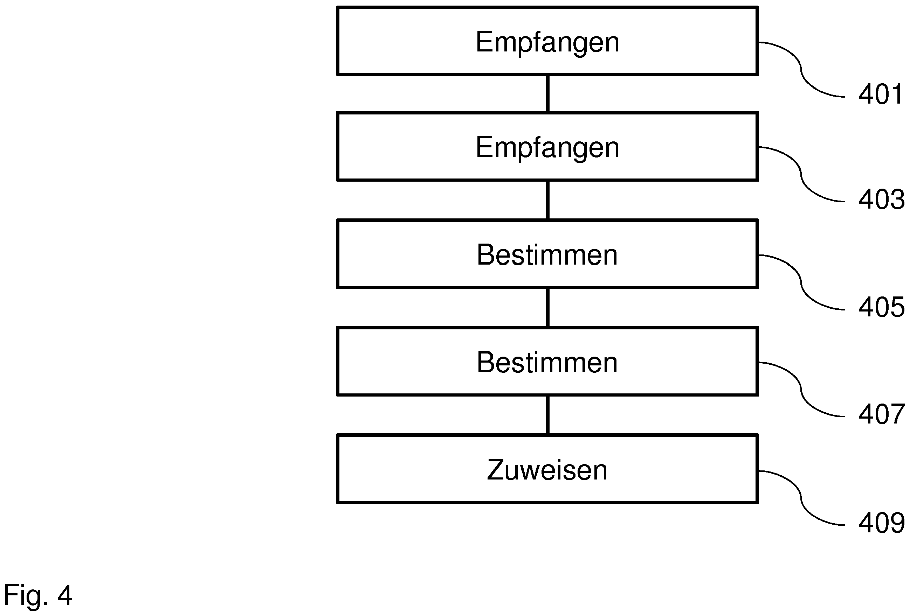

Fig. 4 zeigt ein schematisches Diagramm eines Verfahrens zum Zuweisen eines optischen Kanals zu einem Netzwerkrouter für eine optische Datenübertragung in einem Wellenlängenmultiplex-Kommunikationsnetzwerk. Das Verfahren kann beispielsweise durch die in Fig. 2 dargestellte Netzwerkentität 200 ausgeführt werden.

Das Verfahren umfasst das Empfangen 401 von optischen Daten über einen ersten optischen Kanal des Wellenlängenmultiplex-Kommunikationsnetzwerks, das Empfangen 403 von optischen Daten über einen zweiten optischen Kanal des Wellenlängenmultiplex-Kommunikationsnetzwerkes, das Bestimmen 405 einer ersten Wahrscheinlichkeit von Datenkollisionen in dem ersten optischen Kanal des Wellenlängenmultiplex-Kommunikationsnetzwerkes auf der Basis der empfangenen optischen Daten des ersten optischen Kanals, das Bestimmen 407 einer zweiten Wahrscheinlichkeit von Datenkollisionen in dem zweiten optischen Kanal des Wellenlängenmultiplex-Kommunikationsnetzwerkes auf der Basis der empfangenen optischen Daten des zweiten optischen Kanals und das Zuweisen 409 desjenigen optischen Kanals mit der geringeren Kollisionswahrscheinlichkeit zu dem Netzwerkrouter für die optische Datenübertragung in dem Wellenlängenmultiplex-Kommunikationsnetzwerk.

Das Zuweisen 409 kann beispielsweise durch das Aussenden des vorgenannten Kanalzuweisungssignals erfolgen. Dabei kann der Netzwerkrouter einer der in Fig. 1 dargestellten Netzwerkrouter 103, 105, 107, 109 bzw. der in Fig. 3 dargestellte Netzwerkrouter 300 sein.

### BEZUGSZEICHENLISTE

- 100: Kommunikationssystem
- 101: Netzwerkentität
- 103: Netzwerkrouter
- 105: Netzwerkrouter
- 107: Netzwerkrouter
- 109: Netzwerkrouter
- 111: Glasfaser

- 200: Netzwerkentität
- 201: Kommunikationsschnittstelle
- 203: Prozessor

- 300: Netzwerkrouter
- 301: Kommunikationsschnittstelle
- 303: Serviceschnittstelle

- 401: Empfangen von optischen Daten über einen ersten optischen Kanal
- 403: Empfangen von optischen Daten über einen zweiten optischen Kanal
- 405: Bestimmen einer ersten Wahrscheinlichkeit von Datenkollisionen
- 407: Bestimmen einer zweiten Wahrscheinlichkeit von Datenkollisionen
- 409: Zuweisen eines optischen Kanals

## Patentansprüche

1. Zentrale Netzinstanz (101; 200) zum Zuweisen eines optischen Kanals zu einem dezentralen Netzknoten (103, 105, 107, 109; 300) für eine optische Datenübertragung in einem Wellenlängenmultiplex-Kommunikationsnetzwerk, wobei die zentrale Netzinstanz an einem Netzwerkrand angeordnet ist, wobei die zentrale Netzinstanz (101; 200) folgendes umfasst:
eine optische Kommunikationsschnittstelle (201) zum Empfangen von optischen Daten über einen ersten optischen Kanal des Wellenlängenmultiplex-Kommunikationsnetzwerkes, und zum Empfangen von optischen Daten über einen zweiten optischen Kanal des Wellenlängenmultiplex-Kommunikationsnetzwerkes;
einen Prozessor (203), welcher eingerichtet ist,
- auf der Basis der empfangenen optischen Daten des ersten optischen Kanals des Wellenlängenmultiplex-Kommunikationsnetzwerkes eine erste Wahrscheinlichkeit von Datenkollisionen in dem ersten optischen Kanal des Wellenlängenmultiplex-Kommunikationsnetzwerkes zu bestimmen,
- auf der Basis der empfangenen optischen Daten des zweiten optischen Kanals des Wellenlängenmultiplex-Kommunikationsnetzwerkes eine zweite Wahrscheinlichkeit von Datenkollisionen in dem zweiten optischen Kanal des Wellenlängenmultiplex-Kommunikationsnetzwerkes zu bestimmen,
- wobei die Datenkollisionen sich auf eine gleichzeitige Verwendung der optischen Kanäle durch unterschiedliche Netzwerkteilnehmer beziehen,
**dadurch gekennzeichnet, dass** der Prozessor (203) eingerichtet ist,
- denjenigen optischen Kanal mit der geringeren Wahrscheinlichkeit von Datenkollisionen zu dem dezentralen Netzknoten (103, 105, 107, 109; 300) für die optische Datenübertragung in dem Wellenlängenmultiplex-Kommunikationsnetzwerk zuzuweisen,
- wobei dem dezentralen Netzknoten (103, 105, 107, 109; 300) der erste optische Kanal zugewiesen ist,
- wobei die erste Wahrscheinlichkeit von Datenkollisionen größer als die zweite Wahrscheinlichkeit von Datenkollisionen ist, und
- wobei der der Prozessor (203) ausgebildet ist, einen Wechsel von dem ersten optischen Kanal zu dem zweiten optischen Kanal durch Zuweisung des zweiten optischen Kanals zu dem dezentralen Netzknoten (103, 105, 107, 109; 300) nur dann zu initiieren, wenn die erste Wahrscheinlichkeit von Datenkollisionen einen vorbestimmten Schwellwert überschreitet.

2. Zentrale Netzinstanz (101; 200) nach Anspruch 1, wobei der Prozessor (203) ausgebildet ist, eine Anzahl von Datenkollisionen in dem ersten optischen Kanal innerhalb eines vorbestimmten Zeitintervalls zu erfassen, um die erste Wahrscheinlichkeit zu bestimmen, und wobei der Prozessor (203) ausgebildet ist, eine Anzahl von Datenkollisionen in dem zweiten optischen Kanal innerhalb des vorbestimmten Zeitintervalls zu erfassen, um die zweite Wahrscheinlichkeit zu bestimmen.

3. Zentrale Netzinstanz (101; 200) nach einem der vorstehenden Ansprüche, wobei der Prozessor (203) ausgebildet ist, anhand der empfangenen Daten des ersten optischen Kanals eine erste Bitfehlerwahrscheinlichkeit zu berechnen, um eine Datenkollision in dem ersten optischen Kanal zu erfassen, und wobei der Prozessor (203) ferner ausgebildet ist, anhand der empfangenen Daten des zweiten optischen Kanals eine zweite Bitfehlerwahrscheinlichkeit zu berechnen, um eine Datenkollision in dem zweiten optischen Kanal zu erfassen.

4. Zentrale Netzinstanz (101; 200) nach einem der vorstehenden Ansprüche, wobei der Prozessor (203) ausgebildet ist, eine Datenkollision in dem ersten optischen Kanal anhand eines Signalpegels der optischen Daten des ersten optischen Kanals zu bestimmen, und wobei der Prozessor (203) ausgebildet ist, eine Datenkollision in dem zweiten optischen Kanal anhand eines Signalpegels der optischen Daten des zweiten optischen Kanals zu bestimmen.

5. Zentrale Netzinstanz (101; 200) nach einem der vorstehenden Ansprüche, wobei die zentrale Netzinstanz (101; 200) ausgebildet ist, ein Kanalzuweisungssignal zu dem dezentralen Netzknoten (103, 105, 107, 109; 300) auszusenden, um dem dezentralen Netzknoten (103, 105, 107, 109; 300) denjenigen optischen Kanal mit der geringeren Wahrscheinlichkeit von Datenkollisionen zuzuweisen.

6. Zentrale Netzinstanz (101; 200) nach Anspruch 5, wobei das Kanalzuweisungssignal mittels eines kryptographischen Netzwerkprotokolls zu dem dezentralen Netzknoten (103, 105, 107, 109; 300) ausgesendet wird.

7. Zentrale Netzinstanz (101; 200) nach einem der vorstehenden Ansprüche, wobei der erste optische Kanal und der zweite optische Kanal in unterschiedlichen Frequenzbereichen angeordnet sind.

8. Zentrale Netzinstanz (101; 200) nach einem der vorstehenden Ansprüche, wobei die optische Kommunikationsschnittstelle (201) eine optische Empfangsdiode zum Empfangen von optischen Daten einer Mehrzahl von optischen Kanälen umfasst.

9. Zentrale Netzinstanz (101; 200) nach einem der vorstehenden Ansprüche, welche ausgebildet ist, das Carrier Sense Multiple Access Verfahren auszuführen.

10. Zentrale Netzinstanz (101; 200) nach einem der vorstehenden Ansprüche, wobei die zentrale Netzinstanz (101; 200) ein Netzwerkrouter (103, 105, 107, 109; 300) ist.

11. Verfahren zum Zuweisen eines optischen Kanals zu einem dezentralen Netzknoten (103, 105, 107, 109; 300) für eine optische Datenübertragung in einem Wellenlängenmultiplex-Kommunikationsnetzwerk, mit:
Empfangen (401) von optischen Daten in einer optischen Kommunikationsschnittstelle einer zentralen Netzinstanz über einen ersten optischen Kanal des Wellenlängenmultiplex-Kommunikationsnetzwerkes;
Empfangen (403) von optischen Daten in der optischen Kommunikationsschnittstelle einer zentralen Netzinstanz über einen zweiten optischen Kanal des Wellenlängenmultiplex-Kommunikationsnetzwerkes;
Bestimmen (405) einer ersten Wahrscheinlichkeit von Datenkollisionen in dem ersten optischen Kanal des Wellenlängenmultiplex-Kommunikationsnetzwerkes auf der Basis der empfangenen optischen Daten des ersten optischen Kanals des Wellenlängenmultiplex-Kommunikationsnetzwerkes;
Bestimmen (407) einer zweiten Wahrscheinlichkeit von Datenkollisionen in dem zweiten optischen Kanal des Wellenlängenmultiplex-Kommunikationsnetzwerkes auf der Basis der empfangenen optischen Daten des zweiten optischen Kanals des Wellenlängenmultiplex-Kommunikationsnetzwerkes, wobei die Datenkollisionen sich auf eine gleichzeitige Verwendung der optischen Kanäle durch unterschiedliche Netzwerkteilnehmer beziehen;
ferner **gekennzeichnet durch** die folgenden Schritte:
Zuweisen (409) desjenigen optischen Kanals mit der geringeren
Kollisionswahrscheinlichkeit zu dem dezentralen Netzknoten (103, 105, 107, 109; 300) für die optische Datenübertragung in dem Wellenlängenmultiplex-Kommunikationsnetzwerk,
- wobei dem dezentralen Netzknoten (103, 105, 107, 109; 300) der erste optische Kanal zugewiesen ist,
- wobei die erste Wahrscheinlichkeit von Datenkollisionen größer als die zweite Wahrscheinlichkeit von Datenkollisionen ist; und
Initiieren eines Wechsels von dem ersten optischen Kanal zu dem zweiten optischen Kanal **durch** Zuweisung des zweiten optischen Kanals zu dem dezentralen Netzknoten (103, 105, 107, 109; 300) nur dann, wenn die erste Wahrscheinlichkeit von Datenkollisionen einen vorbestimmten Schwellwert überschreitet.

## Claims

1. Central network entity (101; 200) for allocating an optical channel to a local network node (103, 105, 107, 109; 300) for an optical data transmission in a wavelength-division multiplexing communication network, wherein the central network entity is arranged at a network edge, the central network entity (101; 200) comprising the following:
an optical communication interface (201) for receiving optical data via a first optical channel of the wavelength-division multiplexing communication network, and for receiving optical data via a second optical channel of the wavelength-division multiplexing communication network;
a processor (203) that is configured
- to determine a first probability of data collisions in the first optical channel of the wavelength-division multiplexing communication network on the basis of the received optical data of the first optical channel of the wavelength-division multiplexing communication network,
- to determine a second probability of data collisions in the second optical channel of the wavelength-division multiplexing communication network on the basis of the received optical data of the second optical channel of the wavelength-division multiplexing communication network,
- wherein the data collisions relate to a simultaneous use of the optical channels by different network subscribers,
**characterized in that** processor (203) is configured
- to allocate that optical channel having the lower probability of data collisions to the local network node (103, 105, 107, 109; 300) for the optical data transmission in the wavelength-division multiplexing communication network,
- wherein the local network node (103, 105, 107, 109; 300) has the first optical channel allocated to it,
- wherein the first probability of data collisions is greater than the second probability of data collisions, and
- wherein the processor (203) is designed to initiate a change from the first optical channel to the second optical channel by allocating the second optical channel to the local network node (103, 105, 107, 109; 300) only if the first probability of data collisions exceeds a predetermined threshold value.

2. Central network entity (101; 200) according to Claim 1, wherein the processor (203) is designed to measure a number of data collisions in the first optical channel within a predetermined interval of time in order to determine the first probability, and wherein the processor (203) is designed to measure a number of data collisions in the second optical channel within the predetermined interval of time in order to determine the second probability.

3. Central network entity (101; 200) according to any one of the preceding claims, wherein the processor (203) is designed to compute a first bit error probability by means of the received data of the first optical channel in order to detect a data collision in the first optical channel, and wherein the processor (203) is further designed to compute a second bit error probability by means of the received data of the second optical channel in order to detect a data collision in the second optical channel.

4. Central network entity (101; 200) according to any one of the preceding claims, wherein the processor (203) is designed to determine a data collision in the first optical channel on the basis of a signal level of the optical data of the first optical channel, and wherein the processor (203) is designed to determine a data collision in the second optical channel on the basis of a signal level of the optical data of the second optical channel.

5. Central network entity (101; 200) according to any one of the preceding claims, wherein the central network entity (101; 200) is designed to transmit a channel allocation signal to the local network node (103, 105, 107, 109; 300) in order to allocate to the local network node (103, 105, 107, 109; 300) that optical channel having the lower probability of data collisions.

6. Central network entity (101; 200) according to Claim 5, wherein the channel allocation signal is transmitted to the local network node (103, 105, 107, 109; 300) by means of a cryptographic network protocol.

7. Central network entity (101; 200) according to any one of the preceding claims, wherein the first optical channel and the second optical channel are arranged in different frequency ranges.

8. Central network entity (101; 200) according to any one of the preceding claims, wherein the optical communication interface (201) comprises an optical receiving diode for receiving optical data of a plurality of optical channels.

9. Central network entity (101; 200) according to any one of the preceding claims, which is designed to perform the carrier sense multiple access method.

10. Central network entity (101; 200) according to any one of the preceding claims, wherein the central network entity (101; 200) is a network router (103, 105, 107, 109; 300).

11. Method for allocating an optical channel to a local network node (103, 105, 107, 109; 300) for an optical data transmission in a wavelength-division multiplexing communication network, comprising:
receiving (401) optical data in an optical communication interface of a central network entity via a first optical channel of the wavelength-division multiplexing communication network;
receiving (403) optical data in the optical communication interface of a central network entity via a second optical channel of the wavelength-division multiplexing communication network;
determining (405) a first probability of data collisions in the first optical channel of the wavelength-division multiplexing communication network on the basis of the received optical data of the first optical channel of the wavelength-division multiplexing communication network;
determining (407) a second probability of data collisions in the second optical channel of the wavelength-division multiplexing communication network on the basis of the received optical data of the second optical channel of the wavelength-division multiplexing communication network,
wherein the data collisions relate to a simultaneous use of the optical channels by different network subscribers;
further **characterized by** the following steps:
allocating (409) that optical channel having the lower collision probability to the local network node (103, 105, 107, 109; 300) for the optical data transmission in the wavelength-division multiplexing communication network,
- wherein the local network node (103, 105, 107, 109; 300) has the first optical channel allocated to it,
- wherein the first probability of data collisions is greater than the second probability of data collisions; and
initiating a change from the first optical channel to the second optical channel by allocating the second optical channel to the local network node (103, 105, 107, 109; 300) only if the first probability of data collisions exceeds a predetermined threshold value.

## Revendications

1. Entité de réseau centralisée (101 ; 200) destinée à associer un canal optique à un noeud de réseau décentralisé (103, 105, 107, 109 ; 300) pour une transmission optique de données dans un réseau de communication à multiplexage en longueur d'onde, dans lequel l'entité de réseau centralisée est disposée sur un bord de réseau, dans lequel l'entité de réseau (101 ; 200) comprend les éléments suivants :
une interface de communication optique (201) destinée à recevoir des données optiques par l'intermédiaire d'un premier canal optique du réseau de communication à multiplexage en longueur d'onde, et à recevoir des données optiques par l'intermédiaire d'un deuxième canal optique du réseau de communication à multiplexage en longueur d'onde ;
un processeur (203) qui est conçu
- pour déterminer, sur la base des données optiques reçues du premier canal optique du réseau de communication à multiplexage en longueur d'onde, une première probabilité de collision de données dans le premier canal optique du réseau de communication à multiplexage en longueur d'onde,
- pour déterminer, sur la base des données optiques reçues du deuxième canal optique du réseau de communication à multiplexage en longueur d'onde, une deuxième probabilité de collision de données dans le deuxième canal optique du réseau de communication à multiplexage en longueur d'onde,
- dans lequel les collisions de données concernent une utilisation simultanée des canaux optiques par des abonnés différents du réseau,
**caractérisé en ce que** le processeur (203) est conçu
- pour associer le canal optique ayant la probabilité la plus faible de collisions de données au noeud de réseau décentralisé (103, 105, 107, 109 ; 300) pour la transmission optique de données dans le réseau de communication à multiplexage en longueur d'onde,
- dans lequel le premier canal optique est associé au noeud de réseau décentralisé (103, 105, 107, 109 ; 300),
- dans lequel la première probabilité de collision de données est supérieure à la deuxième probabilité de collision de données, et
- dans lequel le processeur (203) est conçu pour déclencher un basculement du premier canal optique au deuxième canal optique par association du deuxième canal optique au noeud de réseau décentralisé (103, 105, 107, 109 ; 300) uniquement lorsque la première probabilité de collision de données dépasse une valeur de seuil prédéterminée.

2. Entité de réseau centralisée (101 ; 200) selon la revendication 1, dans laquelle le processeur (203) est conçu pour détecter un nombre de collisions de données dans le premier canal optique au cours d'un intervalle de temps prédéterminé afin de déterminer la première probabilité, et dans laquelle le processeur (203) est conçu pour détecter un nombre de collisions de données dans le deuxième canal optique au cours de l'intervalle de temps prédéterminé afin de déterminer la deuxième probabilité.

3. Entité de réseau centralisée (101 ; 200) selon l'une quelconque des revendications précédentes, dans laquelle le processeur (203) est conçu pour calculer une première probabilité d'erreur sur les bits sur la base des données reçues du premier canal optique afin de détecter une collision de données dans le premier canal optique, et dans laquelle le processeur (203) est en outre conçu pour calculer une deuxième probabilité d'erreur sur les bits sur la base des données reçues du deuxième canal optique afin de détecter une collision de données dans le deuxième canal optique.

4. Entité de réseau centralisée (101 ; 200) selon l'une quelconque des revendications précédentes, dans laquelle le processeur (203) est conçu pour déterminer une collision de données dans le premier canal optique sur la base d'un niveau de signal des données optiques du premier canal optique, et dans lequel le processeur (203) est conçu pour déterminer une collision de données dans le deuxième canal optique sur la base d'un niveau de signal des données optiques du deuxième canal optique.

5. Entité de réseau centralisée (101 ; 200) selon l'une quelconque des revendications précédentes, dans laquelle l'entité de réseau centralisée (101 ; 200) est conçue pour envoyer un signal d'association de canal au noeud de réseau décentralisé (103, 105, 107, 109 ; 300) afin d'associer le canal optique ayant la probabilité la plus faible de collision de données au noeud de réseau décentralisé (103, 105, 107, 109 ; 300).

6. Entité de réseau centralisée (101 ; 200) selon la revendication 5, dans laquelle le signal d'association de canal est envoyé au noeud de réseau décentralisé (103, 105, 107, 109 ; 300) au moyen d'un protocole de réseau cryptographique.

7. Entité de réseau centralisée (101 ; 200) selon l'une quelconque des revendications précédentes, dans laquelle le premier canal optique et le deuxième canal optique sont disposés dans des domaines de fréquence différents.

8. Entité de réseau centralisée (101 ; 200) selon l'une quelconque des revendications précédentes, dans laquelle l'interface de communication optique (201) comprend une diode de réception optique destinée à recevoir des données optiques d'une pluralité de canaux optiques.

9. Entité de réseau centralisée (101 ; 200) selon l'une quelconque des revendications précédentes, qui est conçue pour mettre en oeuvre le procédé d'accès multiple par détection de porteuse.

10. Entité de réseau centralisée (101 ; 200) selon l'une quelconque des revendications précédentes, dans laquelle l'entité de réseau centralisée (101 ; 200) est un routeur de réseau (103, 105, 107, 109 ; 300).

11. Procédé d'association d'un canal optique à un noeud de réseau décentralisé (103, 105, 107, 109 ; 300) destiné à une transmission optique de données dans un réseau de communication par multiplexage en longueur d'onde, comportant:
recevoir (401) des données optiques dans une interface de communication optique d'une entité de réseau centralisée par l'intermédiaire d'un premier canal optique du réseau de communication à multiplexage en longueur d'onde ;
recevoir (403) des données optiques dans une interface de communication optique d'une entité de réseau centralisée par l'intermédiaire d'un deuxième canal optique du réseau de communication à multiplexage en longueur d'onde ;
déterminer (405) une première probabilité de collision de données dans le premier canal optique du réseau de communication à multiplexage en longueur d'onde sur la base des données optiques reçues du premier canal optique du réseau de communication à multiplexage en longueur d'onde ;
déterminer (407) une deuxième probabilité de collision de données dans le deuxième canal optique du réseau de communication à multiplexage en longueur d'onde sur la base des données optiques reçues du deuxième canal optique du réseau de communication à multiplexage en longueur d'onde, dans lequel les collisions de données concernent une utilisation simultanée des canaux optiques par des abonnés différents du réseau ;
**caractérisé en outre par** les étapes suivantes :
associer (409) le canal optique ayant la probabilité la plus faible de collision de données au noeud de réseau décentralisé (103, 105, 107, 109 ; 300) pour la transmission optique de données dans le réseau de communication à multiplexage en longueur d'onde,
- dans lequel le premier canal optique est associé au noeud de réseau décentralisé (103, 105, 107, 109 ; 300) ;
- dans lequel la première probabilité de collision de données est supérieure à la deuxième probabilité de collision de données, et
- déclencher un basculement du premier canal optique au deuxième canal optique par association du deuxième canal optique au noeud de réseau décentralisé (103, 105, 107, 109 ; 300) uniquement lorsque la première probabilité de collision de données dépasse une valeur seuil prédéterminée.
